# EUROPÄISCHE PATENTSCHRIFT

(11) **EP 2 504 677 B1**
(45) Veröffentlichungstag und Bekanntmachung des Hinweises auf die Patenterteilung: **20.07.2016**
(21) Anmeldenummer: 10788273.0
(22) Anmeldetag: 24.11.2010
(51) Int. Cl.: G01L 3/10

(54) **DREHMOMENTSENSOR**
TORQUE SENSOR
CAPTEUR DE COUPLE DE ROTATION

(30) Priorität: 24.11.2009 DE 102009054326
(43) Veröffentlichungstag der Anmeldung: 03.10.2012
(73) Patentinhaber: Continental Teves AG & Co. oHG, 60488 Frankfurt (DE)
(72) Erfinder: BIEBRICHER, Lothar, 61440 Oberursel (DE); ANTONI, Henrik, 63579 Freigericht (DE); GOLL, Manfred, 63695 Glauburg 2 (DE)
(86) Internationale Anmeldenummer: PCT/EP2010/068106
(87) Internationale Veröffentlichungsnummer: WO 2011/064245

(56) Entgegenhaltungen:
- DE-A1-102007 059 364
- US-A1- 2005 126 310
- US-A1- 2005 223 820
- US-A1- 2008 028 870

## Beschreibung

Die Erfindung betrifft einen Drehmomentsensor gemäß Oberbegriff von Anspruch 1 sowie ein Verfahren zur Herstellung eines Drehmomentsensors.

Es sind Drehmomentsensoren für Kraftfahrzeuge bekannt, die mit einem magnetischen Wirkprinzip das Drehmoment erfassen, wie beispielsweise der in Druckschrift EP 1 269 133 B1 vorgeschlagene Drehmomentsensor. Dabei sind solche Drehmomentsensoren meist aus relativ vielen Komponenten zusammengesetzt, was den Herstellungsprozess verkompliziert, Fertigungsungenauigkeiten kumulieren lässt oder Probleme bei der Dichtigkeit verursachen kann.

Bei Drehmomentsensoren, insbesondere solchen Drehmomentsensoren, ist es üblich, das Magnetfeldsensorelement sowie eine Signalverarbeitungsschaltung auf einer Platine anzuordnen, die in den gesamten Drehmomentsensor eingebaut wird.

Es ist auch bekannt ein Magnetfeldsensorelement des Sensormoduls eines Drehmomentsensors mit einem Leadframe zu kontaktieren und in einem mehrteiligen Kunststoffgehäuse anzuordnen. Andere Konstruktionsbeispiele von Drehmomentsensoren mit Magnetfeldsensorelement finden sich in den Dokumenten US2005/0126310 und DE102007059364.

Der Erfindung liegt die Aufgabe zu Grunde, einen Drehmomentsensor bzw. ein Herstellungsverfahren für einen Drehmomentsensor vorzuschlagen, bei dem der Drehmomentsensor relativ einfach und kostengünstig herstellbar ist.

Diese Aufgabe wird erfindungsgemäß gelöst durch den Drehmomentsensor gemäß Anspruch 1 und das Verfahren zur Herstellung eines Drehmomentsensors gemäß Anspruch 13.

Die zumindest teilweise, gemeinsame Umspritzung des wenigstens einen Magnetfeldsensorelements und des Leadframes ist bevorzugt als direkte Umspritzung, dabei insbesondere als Vorspritzling bzw. Premoldgehäuse, ausgebildet und nicht als mehrteiliges Kunststoffgehäuse, beispielsweise umfassend zwei Kunststoffschalen, die montiert werden.

Es ist bevorzugt, dass das Kollektormodul und das Sensormodul jeweils ein Kunststoffgehäuse umfassen, wobei das Kunststoffgehäuse des Sensormoduls als die gemeinsame, zumindest teilweise Umspritzung des mindestens einen Magnetfeldsensorelements und des Leadframes ausgebildet ist, wobei die Kunststoffgehäuse des Kollektormoduls und des Sensormoduls jeweils wenigstens ein Mittel aufweisen für eine gemeinsame formschlüssige Verbindung zwischen Kollektormodul und Sensormodul.

Vorzugsweise sind das Kollektormodul und das Sensormodul zusätzlich zumindest teilweise, gemeinsam umspritzt. Hierdurch werden insbesondere die Auswirkung kombinierter Fertigungsungenauigkeiten vermindert oder begrenzt und/oder die Dichtigkeit des Drehmomentsensors erhöht, besonders im Bereich der elektrischen Kontakte und elektronischen Bauelemente. Das "zusätzlich" hinsichtlich der gemeinsamen Umspritzung bezieht sich insbesondere darauf, dass ja bereits das Kollektormodul und das Sensormodul für sich selbst jeweils ein gespritztes Premoldgehäuse aufweisen.

Unter dem Kunststoffgehäuse des Kollektormoduls und des Sensormoduls wird vorzugsweise jeweils ein Vorspritzling bzw. ein Premoldgehäuse verstanden.

Unter dem gemeinsamen Umspritzen des Kollektormoduls und des Sensormoduls wird bevorzugt ein Overmold-Spritzgießvorgang verstanden bzw. ein entsprechendes Overmold-Kunststoffgehäuse.

Das Kollektormodul und das Sensormodul umfassen vorzugsweise zumindest eine Positionierausnehmung und wenigstens einen Positionierstift, als Mittel zur formschlüssigen Verbindung zwischen Kollektormodul und Sensormodul.

Es ist bevorzugt, dass das Kollektormodul eine oder mehrere Ausnehmungen aufweist, in welche das eine oder die mehreren Magnetfeldsensorelemente zumindest teilweise eingeführt sind, wodurch das zumindest eine Magnetfeldsensorelement gegenüber dem wenigstens einen Kollektor in definierter Weise ausgerichtet und positioniert ist.

Es ist zweckmäßig, dass das Sensormodul zumindest eine Signalverarbeitungsschaltung umfasst, welche durch den Leadframe elektrisch kontaktiert ist, wobei die wenigstens eine Signalverarbeitungsschaltung separat ausgebildet ist oder in oder mit dem wenigstens einen Magnetfeldsensorelement integriert ist und/oder dass der Leadframe Kontaktpins eines Steckers umfasst oder dass der Leadframe mit einem Kabel elektrisch kontaktiert verbunden ist, wobei dieser Stecker oder Kabelabgang insbesondere durch die gemeinsame Umspritzung des Kollektormoduls und Sensormoduls ausgebildet und/oder abgedichtet ist. Bei einer Ausbildung eines Kabelabgangs ist besonders bevorzugt die elektrische Kontaktierung der Kontaktpins des Leadframes mit dem Kabel geschweißt, gecrimpt oder gelötet ausgebildet.

Vorzugsweise weist der Drehmomentsensor einen Kragen auf, insbesondere mit einer Dichtung, wobei der Kragen so ausgebildet ist, dass der Drehmomentsensor abgedichtet und/oder formschlüssig in ein externes Gehäuse eingefügt werden kann bzw. ist, beispielsweise in das Gehäuse einer Lenkung bzw. eines Lenkgetriebes.

Es ist bevorzugt, dass das Kollektormodul oder die gemeinsame Umspritzung des Kollektormoduls und des Sensormoduls ein Klammerelement umfasst, welches so ausgebildet ist, dass es zur formschlüssigen Positionierung und/oder Fixierung am Außenumfang einer Welle oder eines zylinderförmigen Körpers ausgebildet ist und dafür mindestens zwei abragende Arme umfasst.

Es ist zweckmäßig, dass das Sensormodul zumindest zwei Teilmodule umfasst, welche jeweils wenigstens ein Magnetfeldsensorelement und mindestens einen Leadframe umfassen, wobei diese Teilmodule so ausgebildet sind, dass sie formschlüssig miteinander verbunden sind. Insbesondere weist hierzu ein Teilmodul ein Nutelement auf und ein anderes Teilmodul ein Federelement, dass in das Nutelement des zu verbindenden Teilmoduls eingepasst wird.

Das Kollektormodul umfasst vorzugsweise zwei Kollektoren, welche jeweils ein Kreissegment und ein gebogenes Konzentratorelement umfassen, wobei die beiden Konzentratorelemente so ausgebildet und angeordnet sind, dass sie zumindest einen gemeinsamen Luftspalt zwischen einander ausbilden, in welchem wenigstens eine Ausnehmung angeordnet ist, zur Aufnahme wenigstens eines Magnetfeldsensorelements. Die beiden Konzentratorelemente des Kollektormoduls sind insbesondere zumindest teilweise umspritzt, wobei in dem Kunststoffgehäuse dieser gemeinsamen Umspritzung die wenigstens eine Ausnehmung im Luftspalt zwischen den beiden Konzentratorelementen der Kollektoren ausgebildet ist.

Es ist zweckmäßig, dass der Drehmomentsensor eine Welle mit zwei Wellenabschnitten, einen magnetischen Encoder und ein Statormodul umfasst, wobei der erste und der zweite Wellenabschnitt durch einen Torsionsstab miteinander verbunden sind und das Drehmoment erfasst werden soll, welches an zumindest einen dieser Wellenabschnitte angreift, wobei auf dem ersten Wellenabschnitt der magnetische Encoder angeordnet ist und auf dem zweiten Wellenabschnitt das Statormodul, das dem Encoder zugeordnet ist und diesen zumindest teilweise, berührungslos umschließt und das vom magnetischen Encoder erzeugte Magnetfeld moduliert, wobei das vom Statormodul modulierte Magnetfeld vom Kollektormodul erfasst und zu dem wenigstens einen Magnetfeldsensorelement geleitet wird. Das Statormodul umfasst besonders bevorzugt zwei Statoren aus magnetisch leitfähigem Material, welche ganz besonders bevorzugt jeweils bezüglich des Torsionsstabs axial abragende Finger ausweisen, die abwechselnd ineinandergreifen und das Magnetfeld modulieren und jeweils pro Stator an einem Ring befestigt sind. Die beiden Statoren sind zweckmäßigerweise bevorzugt mit Kunststoff gemeinsam umspritzt.

Vorzugsweise weist der Drehmomentsensor einen oder mehrere der folgenden Vorteile auf:
- Sich summierenden Toleranzen bzw. Fertigungs- und/oder Positionierungsungenauigkeiten zwischen den Funktionsbauteilen bzw. Modulen werden reduziert, insbesondere durch werkzeugbedingte direkte Verknüpfung.
- Der Aufbau des Drehmomentsensors, insbesondere des Sensor- und/oder Kollektormoduls, ermöglicht durch gleiche Anordnung der Funktionsbauteile Stecker- bzw. Kabelausgänge in allen Raumachsen.
- Die Anzahl der notwendigen Verbindungsbauteile wird reduziert, insbesondere minimiert.
- Die Anzahl der notwendigen Fertigungsschritte wird verringert, insbesondere minimiert.
- Gleiche Premold-Umpritzung bzw. Umspritzung bei redundanter Sensorausführung (2 Sensorelemente).
- Funktionsteile bzw. Module werden gegeneinander abgedichtet.

Das erfindungsgemäße Verfahren wird vorzugsweise ergänzt, indem im Zuge der Herstellung des Kollektormoduls mindestens ein mechanisches Verbindungselement aus Spritzguss ausgebildet wird, und indem im Zuge der Herstellung des Sensormoduls ebenfalls wenigstens ein mechanisches Verbindungselement aus Spritzguss ausgebildet wird, wonach das Kollektormodul und das Sensormodul mittels des jeweils zumindest einen mechanischen Verbindungselements formschlüssig miteinander verbunden werden.

Das Kollektormodul und das Sensormodul werden bevorzugt zusätzlich zumindest teilweise, gemeinsam umspritzt. Dies geschieht insbesondere nach und zusätzlich zu einer formschlüssigen Verbindung zwischen Kollektormodul und Sensormodul.

Während des Spritzgießens des Kunststoffgehäuses des Kollektormoduls wird vorzugsweise zumindest eine Ausnehmung ausgebildet, in welche wenigstens ein Magnetfeldsensorelement des Sensormoduls danach im Zuge des formschlüssigen Verbindens mit dem Kollektormodul zumindest teilweise eingeführt wird.

Es ist bevorzugt, dass während des gemeinsamen Umspritzens des Kollektormoduls und des Sensormoduls ein Stecker oder Kabelabgang ausgebildet wird, welcher Kontaktpins bzw. Kontaktflächen des Leadframes des Sensormoduls als elektrische Kontakte nutzt und wobei im Zuge dieses gemeinsamen Umspritzens insbesondere ein Kragen ausgebildet ist, mit dem der Drehmomentsensor in ein externes Gehäuse abgedichtet und/oder formschlüssig eingefügt werden kann.

Es ist zweckmäßig, dass im Zuge des Spritzgießens des Kunststoffgehäuses des Kollektormoduls oder im Zuge des gemeinsamen Umspritzens des Kollektormoduls und des Sensormoduls ein Klammerelement ausgebildet wird, das zur formschlüssigen Positionierung und/oder Fixierung am Außenumfang einer Welle oder eines zylinderförmigen Körpers mit wenigstens zwei abragenden Armen ausgebildet ist.

Das Verfahren zur Herstellung eines Drehmomentsensors umfasst vorzugsweise einen oder mehrere der folgenden Schritte, insbesondere in der folgenden Reihenfolge:
Zwei Kollektoren aus magnetisch leitfähigem Material werden mittels Spritzguss verbunden, wodurch das Kollektormodul entsteht. Im Zuge dieses Spritzgussvorgangs werden insbesondere ein oder zwei oder mehrere Positionierausnehmungen zur Aufnahme von Positionierstiften anderer Module, besonders bevorzugt des Sensormoduls, ausgebildet und/oder ein oder zwei oder mehrere Sensorelement-Ausnehmungen zur Aufnahme von einem oder zwei oder mehreren Sensorelementen bzw. Magnetfeldsensorelementen ausgebildet, wodurch dieses wenigstens eine Sensorelement definiert den beiden Kollektoren zugeordnet wird, insbesondere berührungslos zwischen den beiden Kollektoren. Zweckmäßigerweise wird am Kunststoffgehäuse des Kollektormoduls oder des gemeinsamen Drehmomentsensors ein Klammerelement ausgebildet, insbesondere mit zwei abragenden Armen, welche so ausgebildet sind, dass sie ein Statormodul außen bzw. an dessen Außengehäuse zumindest teilweise umgreifen und so das Kollektormodul relativ zum Statormodul in definierter Weise positionieren. Zusätzlich wird das Sensorelement, verbunden mit einem Leadframe, der beispielsweise angeschweißt oder gecrimpt oder angeklebt wird und welcher insbesondere mehrfach gebogen ist, und dessen Enden beispielsweise als Steckerkontakte ausgebildet sind, zumindest teilweise umspritzt, wodurch das Sensormodul bzw. das Premold-Gehäuse des Sensormoduls entsteht. Dieses Premold-Gehäuse weist ein oder mehrere Positionierstifte und/oder Ausnehmungen, auf, zur formschlüssigen Verbindung mit dem Kollektormodul. Außerdem werden während der Entstehung des Premold-Gehäuses optional wenigstens ein Federelement und/oder ein Nutelement ausgebildet, wenn das Sensormodul mehrere Teilsensormodule umfasst. Diese sind bevorzugt so ausgebildet, dass an dieses einseitig oder beidseitig ein identisch ausgebildetes Premold-Gehäuse, ebenfalls zumindest umfassend einen Leadframe und ein Sensorelement, befestigt werden kann, und zwar das Federelement des einen Premold-Gehäuse eingehakt in das Nutelement des anderen Premold-Gehäuses, jeweils eines Teilsensormoduls. Zusätzlich wird während der Entstehung des zumindest einen Premold-Gehäuses des Sensormoduls oder eines Teilsensormoduls wenigstens ein Positionierstift an diesem Premold-Gehäuse erzeugt, der so ausgebildet ist, dass er in eine Positionierausnehmung des Kollektormoduls eingefügt werden kann und dabei insbesondere die Eintauchtiefe des Sensorelements in die dafür vorgesehene Sensorelement-Ausnehmung des Kollektormoduls vorgibt. Anschließend werden das Sensormodul, insbesondere ein oder mehrere Premold-Gehäuse bzw. Teilsensormodule, mit dem Kollektormodul formschlüssig verbunden, indem zumindest ein Positionierstift des Premold-Gehäuses in eine Positionierausnehmung des Kollektormoduls eingeführt wird und insbesondere im Wesentlichen gleichzeitig das wenigstens eine Sensorelement in eine Sensorelement-Ausnehmung des Kollektormoduls eingeführt wird, wodurch eine formschlüssige Verbindung zwischen dem wenigstens einen Premold-Gehäuse des Sensormoduls und dem Kunststoffgehäuse des Kollektormoduls entsteht. Danach werden das verbundene Kollektormodul mit dem wenigstens einen Premold-Gehäuse des Sensormoduls gemeinsam in ein Spritzgusswerkzeug eingelegt und gemeinsam, zumindest teilweise, umspritzt, wodurch ein gemeinsames Sensor-Kollektormodul bzw. ein Drehmomentsensor entsteht. Dieser Drehmomentsensor umfasst insbesondere außerdem einen Stecker aus Mold, dessen Pins aus den Enden des wenigstens einen Leadframes bestehen. Besonders bevorzugt wird bei diesem Spritzgussvorgang oder alternativ einem darauffolgenden Spritzgussvorgang ein Dichtflansch an dem Sensor-Kollektormodul erzeugt oder angebracht, welcher so ausgebildet ist, dass er das Sensor-Kollektormodul gegenüber einem weiteren, externen Gehäuse, beispielsweise einem Lenkungsgehäuse, abdichten kann. An diesem Dichtflansch wird ganz besonders bevorzugt ein O-Ring zum verbesserten Abdichten angebracht, welcher beispielsweise aus Elastomer oder Gummi ausgebildet ist. Der Dichtflansch ist alternativ vorzugsweise aus Metall ausgebildet und wird auf andere Weise, beispielsweise durch Ankleben oder teilweise einspritzen an dem Sensor-Kollektormodul befestigt.

Die Erfindung bezieht sich außerdem auf die Verwendung des Drehmomentsensors in Kraftfahrzeugen, insbesondere in oder an einer Lenkung bzw. einem Lenkgetriebe.

Es zeigen in schematischer, beispielhafter Darstellung
Fig. 1 ein Kollektormodul,
Fig. 2 ein Sensormodul,
Fig. 3 ein gemeinsames Sensor-Kollektormodul bzw. einen Drehmomentsensor,
Fig. 4 und 5 alternative, gemeinsame Sensor-Kollektormodule bzw. Drehmomentsensoren,
Fig. 6 eine beispielhafte Drehmomentsensoranordnung bzw. einen Drehmomentsensor mit einem Stator und einer Lenkwelle in einem Lenkungsgehäuse eingebaut,
Fig. 7 ein beispielhaftes Sensormodul ohne bzw. vor der Umspritzung, und
Fig. 8 und 9 dieses Sensormodul nach einer bzw. zwei Umspritzungen.

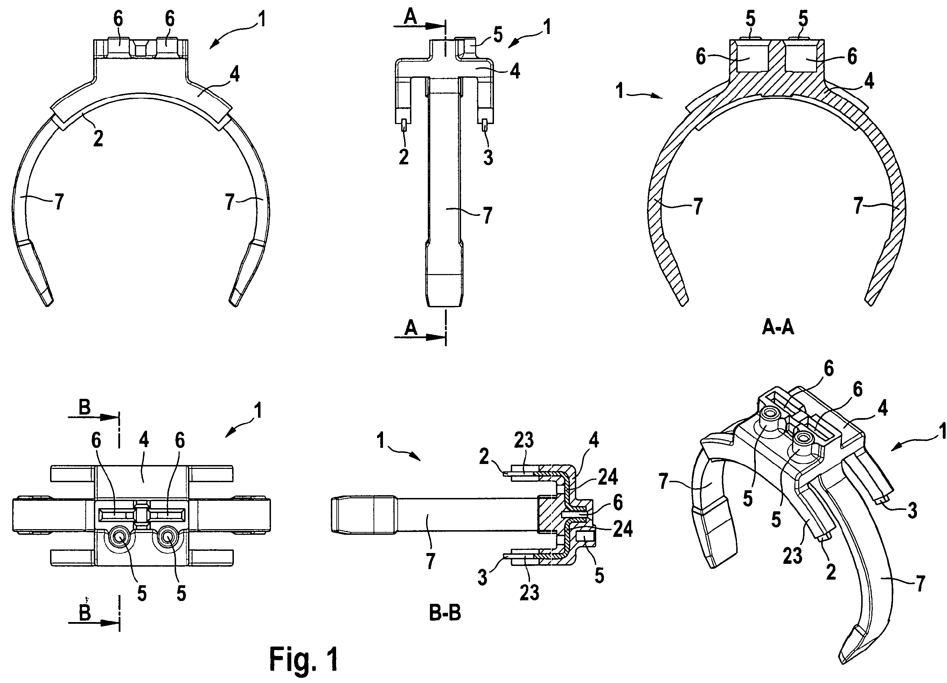

Fig. 1 zeigt ein beispielhaftes Kollektormodul 1 mit zwei Kollektoren 2 und 3 sowie einem Verbindungselement bzw. Kunststoffgehäuse 4 aus Mold, welches zwei Positionierausnehmungen 5, zwei Sensorelement-Ausnehmungen 6 und ein Klammerelement 7 mit zwei abragenden Armen umfasst. Dieses Kollektormodul 1 wird in Fig. 1 aus verschiedenen Perspektiven gezeigt. Das Kunststoffgehäuse 4 ist aus einem Premold ausgebildet für eine zusätzliche Umspritzung. Kollektoren 2 und 3 umfassen jeweils ein Kreissegment 23 und ein gebogenes Konzentratorelement 24. Die beiden Konzentratorelemente 24 bilden zwischen sich einen Luftspalt aus, in dem die beiden Sensorelement-Ausnehmungen 6 ausgebildet und angeordnet sind, so dass durch die Kollektoren 2, 3 ein Magnetfeld den nicht dargestellten Magnetfeldsensorelementen eines Sensormoduls, welche in die Sensorelement-Ausnehmungen eingeführt werden, zugeführt werden kann.

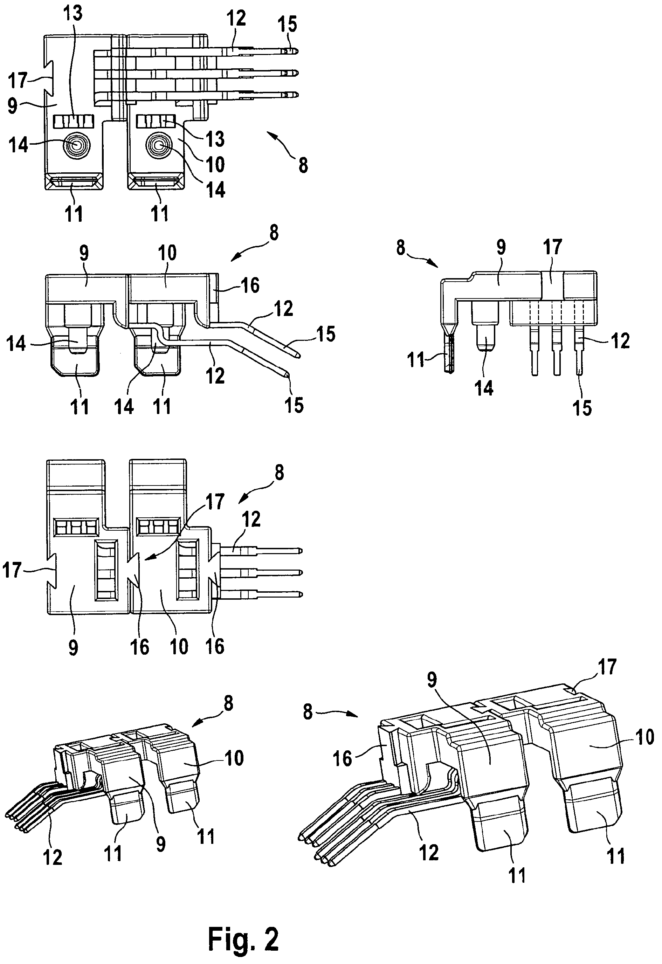

Anhand der Fig. 2 ist ein beispielhaftes Sensormodul 8 veranschaulicht, mit zwei Premold-Gehäusen bzw. Kunststoffgehäusen bzw. Teilsensormodule 9, 10, die jeweils ein Magnetfeldsensorelement 11, einen Leadframe 12, zwei Positionierausnehmungen 13 und einen Positionierstift 14 umfassen. Die Enden 15 Leadframes 12 sind jeweils als Kontaktstifte ausgebildet. Außerdem weist jedes Premold-Gehäuse 9, 10 ein Federelement 16 und ein Nutelement 17 auf. Dabei ist das Federelement 16 des ersten Premold-Gehäuses 9 in das Nutelement 17 des anderen Premold-Gehäuses 10 eingefügt, wodurch die beiden Premold-Gehäuse 9, 10 miteinander verbunden sind und relativ zueinander positioniert sind und das gemeinsame Sensormodul 8 bilden. Die Leadframes 12 und mit ihnen elektrisch kontaktierten Magnetfeldsensorelemente 11 sind direkt in Form der Kunststoffgehäuse 9, 10 umspritzt. Die Kunststoffgehäuse 9, 10 sind also nicht montiert, was deutlich teurer wäre.

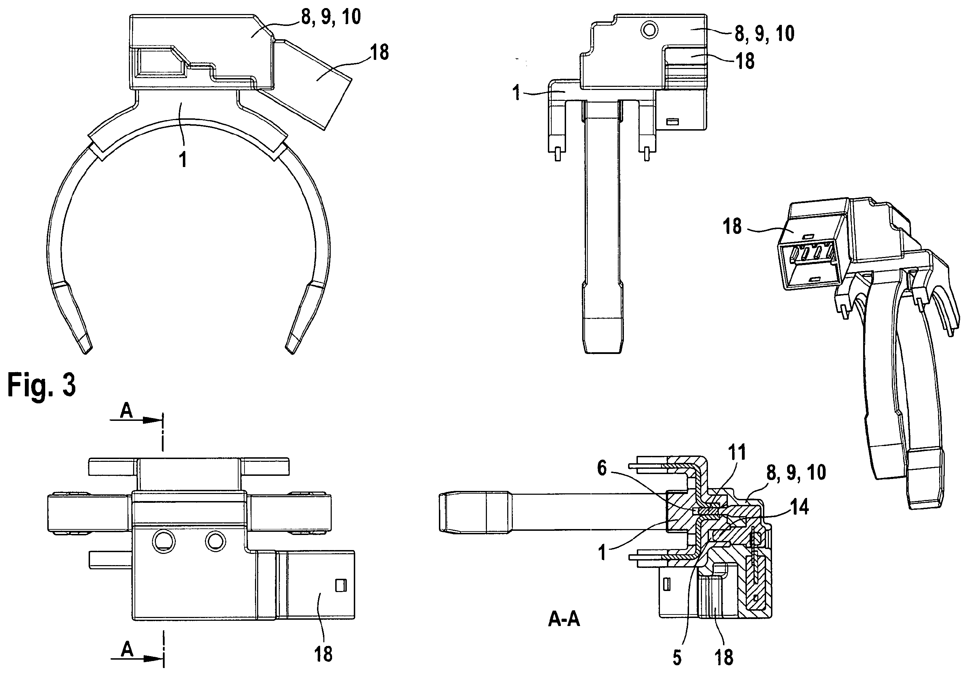

In Fig. 3 ist ein gemeinsames Sensor-Kollektormodul bzw. ein Drehmomentsensor abgebildet, bei welchem die Magnetfeldsensorelemente 11 in die Sensorelement-Ausnehmungen 6 eingepasst sind und die Positionierstifte 14 der Kunststoffgehäuse 9, 10 des Sensormoduls 8 in die Positionierausnehmungen 5 des Kollektormoduls 1. Kollektormodul 1 und Sensormodul 8 sind zusätzlich gemeinsam umspritzt, mittels eines Overmolds-Kunststoffs, wodurch in einfacher und kostengünstiger Weise ein Gesamtgehäuse mit einer hohen Dichtigkeit geschaffen ist. Das Sensor-Kollektormodul bzw. der Drehmomentsensor weist ein Steckergehäuse 18 auf, was aus bzw. im Zuge des gemeinsamen Umspritzens ausgebildet ist, also aus dem Overmold-Kunststoff.

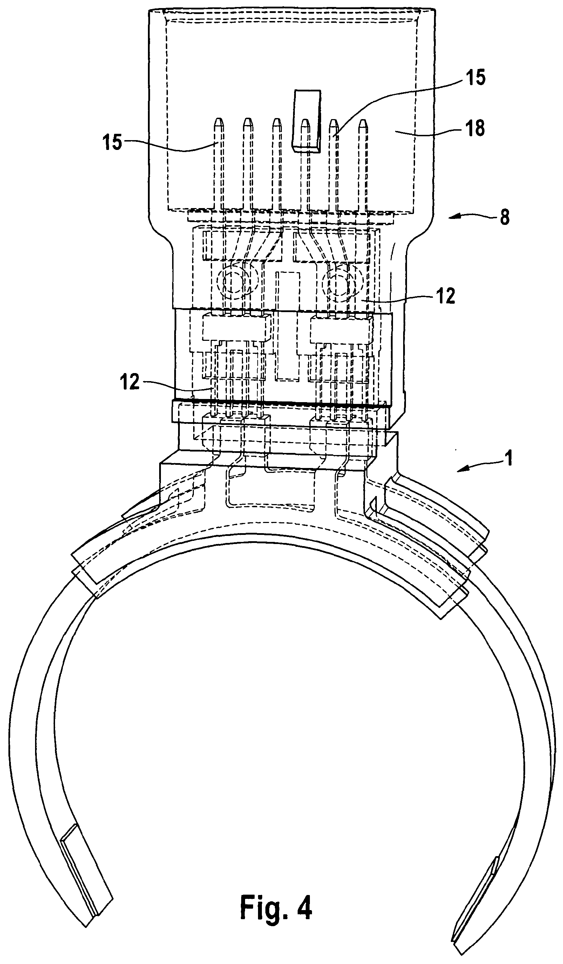

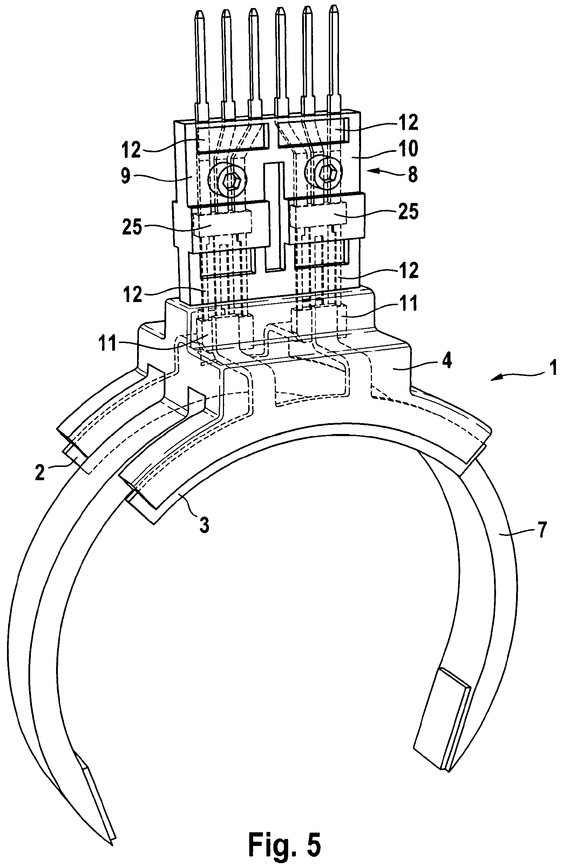

Fig. 4 und 5 zeigen transparente Ausführungsbeispiele des Drehmomentsensors. Wobei in Fig. 5 Kollektormodul 1 mit Kunststoffgehäuse 4 aus Premold eingespritzte Kollektoren 2 und 3 aufweist sowie ein Klammerelement 7 zur Fixierung an einem nicht dargestellten Statormodul. Sensormodul 8 mit Kunststoffgehäuse 9, 10 aus Premold ist mit dem Kollektormodul 8 formschlüssig verbunden, wobei die beiden Magnetfeldsensorelemente 11 zwischen den Kollektoren eingepasst sind.

Sensormodul 8 umfasst zusätzliche Signalverarbeitungsschaltungen 25, die ebenso wie die beiden Magnetfeldsensorelemente 11 mit dem jeweiligen Leadframe 12 der jeweiligen Teilmodule 9, 10 jeweils elektrisch kontaktiert sind und jeweils eingespritzt bzw. umspritzt sind. In Fig. 4 ist Kollektormodul 1 und Sensormodul 8 aus Fig. 5 zusätzlich gemeinsam umspritzt, wobei dabei unter anderem Steckergehäuse 18 ausgebildet ist, wobei die Enden 15 der Leadframes 12 Kontaktpins dieses Steckers 18 bilden.

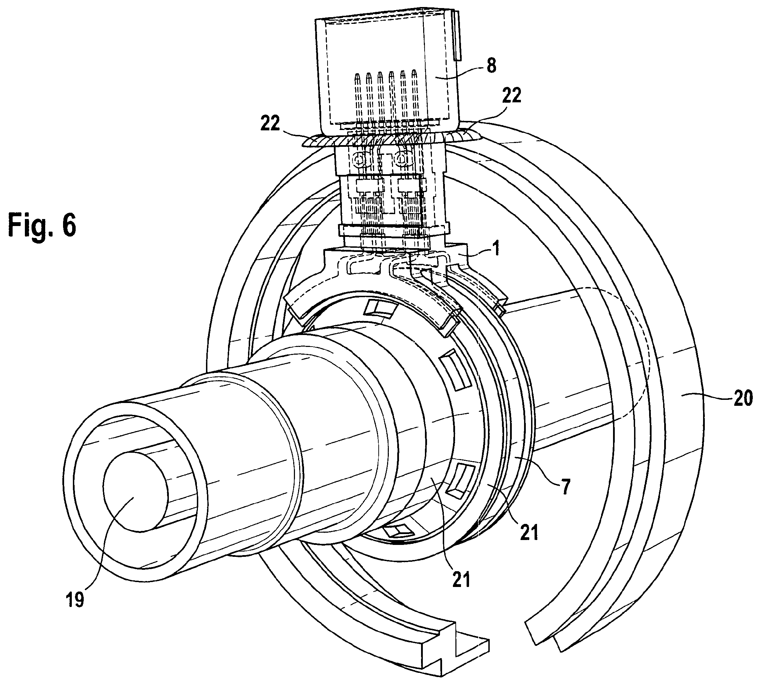

Fig. 6 zeigt eine beispielhafte Ausführungsform des Drehmomentsensors, mit einer Lenkwelle 19, von der nur ein erster Wellenabschnitt abgebildet ist und mit einem Lenkungsgehäuse 20. Der Drehmomentsensor umfasst einen nicht dargestellten Torsionsstab zwischen dem ersten Wellenabschnitt und dem zweiten, nicht dargestellten Wellenabschnitt. Darüber hinaus weist der Drehmomentsensor einen hier nicht sichtbaren magnetischen Encoder auf und ein diesem zugeordnetes Statormodul 21 mit zwei hier nicht sichtbaren Statoren. Das Klammerelement 7 des Kollektormoduls 1 umgreift das Statormodul teilweise und sorgt für eine präzise Relativpositionierung. Sensormodul 8 und Kollektormodul 1 bilden ein gemeinsames Sensor-Kollektormodul. Dichtflansch bzw. Kragen 22 des Sensor-Kollektormoduls dichtet mit einem nicht dargestellten 0-Ring das Sensor-Kollektormodul gegenüber dem Lenkungsgehäuse 20 ab.

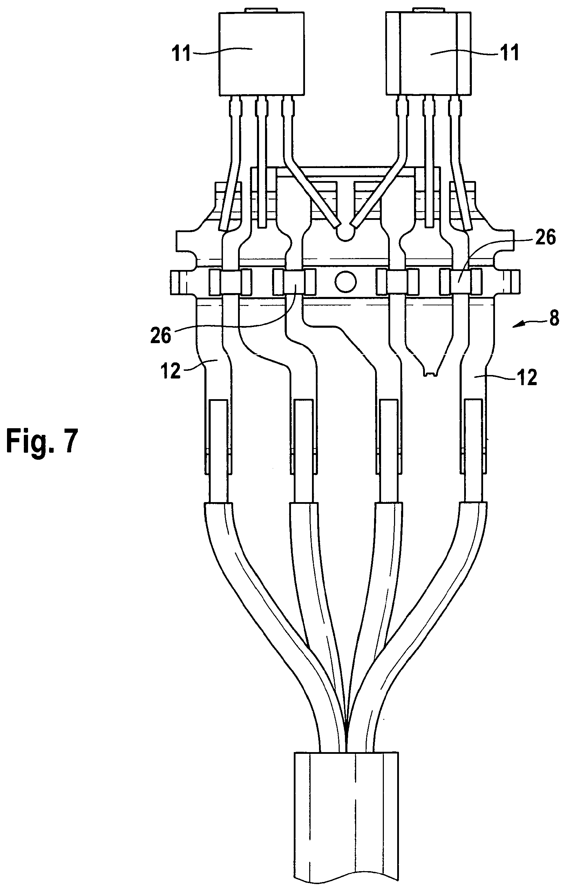

In Fig. 7 ist noch zusätzlich ein beispielhaftes, Sensormodul 8 ohne Kunststoffgehäuse bzw. Umspritzung, also vor dem Umspritzungsvorgang, dargestellt. Dabei sind Magnetfeldsensorelemente 11 mit Leadframe 12 elektrisch kontaktiert bzw. geschweißt verbunden. Außerdem weist Sensormodul 8 mit dem Leadframe verbundene Schutzkondensatoren 26 sowie einen Kabelanschluss 27 auf, wobei die Kabellitzen des Kabelanschlusses 27 mit Leadframe 12 beispielgemäß verschweißt sind.

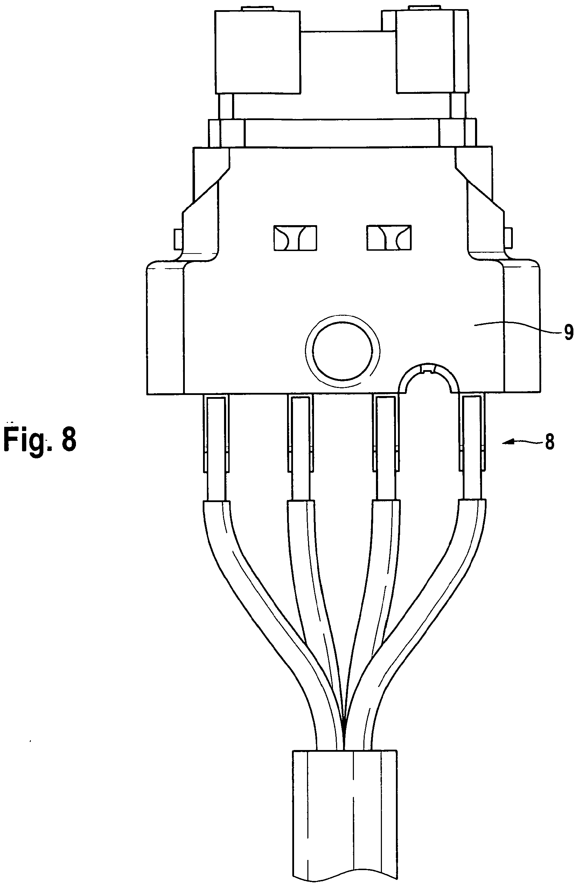

Fig. 8 zeigt Sensormodul 8 aus Fig. 7 im umspritzten Zustand mit Kunststoffgehäuse 9 aus Premold.

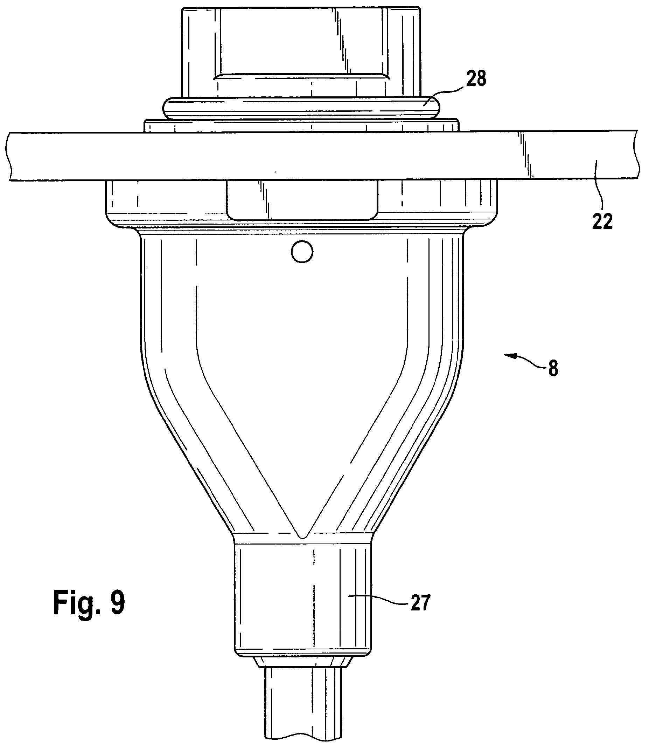

In Fig. 9 ist ein Sensormodul 8 mit einer zusätzlichen Umspritzung abgebildet, welche einen Kragen bzw. Flansch 22 aus Metall fixiert und Kabelanschluss 27 umschließt und abdichtet. Zur Abdichtung an bzw. gegenüber einem nicht dargestellten Kollektormodul oder externen Gehäuse ist zusätzlich ein Dichtelement bzw. O-Ring 28 am Außengehäuse des Sensormoduls 8 angeordnet.

## Patentansprüche

1. Drehmomentsensor umfassend ein Kollektormodul (1) und ein Sensormodul (8), wobei das Kollektormodul (1) zumindest einen Kollektor (2, 3) aus magnetisch leitfähigem Material aufweist und wobei das Sensormodul (8) mindestens ein Magnetfeldsensorelement (11) aufweist, wobei
das Sensormodul (8) einen Leadframe (12) umfasst, der das wenigstens eine Magnetfeldsensorelement (11) elektrisch kontaktiert, und dass der Leadframe (12) und das zumindest eine Magnetfeldsensorelement (11) gemeinsam zumindest teilweise umspritzt sind , **dadurch gekennzeichnet dass**
das Kollektormodul (1) und das Sensormodul (8) zumindest eine Positionierausnehmung (5) und wenigstens einen Positionierstift (14) umfassen, als Mittel zur formschlüssigen Verbindung zwischen Kollektormodul (1) und Sensormodul (8).

2. Drehmomentsensor nach Anspruch 1, **dadurch gekennzeichnet, dass** das Kollektormodul (1) und das Sensormodul (8) jeweils ein Kunststoffgehäuse (4, 9, 10) umfassen, wobei das Kunststoffgehäuse (9, 10) des Sensormoduls als die gemeinsame, zumindest teilweise Umspritzung des mindestens einen Magnetfeldsensorelements (11) und des Leadframes (12) ausgebildet ist, wobei die Kunststoffgehäuse (4, 9, 10) des Kollektormoduls (1) und des Sensormoduls (8) jeweils wenigstens ein Mittel (5, 14) aufweisen für eine gemeinsame formschlüssige Verbindung zwischen Kollektormodul (1) und Sensormodul (8).

3. Drehmomentsensor nach Anspruch 1 oder 2, **dadurch gekennzeichnet, dass** das Kollektormodul (1) und das Sensormodul (8) zusätzlich zumindest teilweise, gemeinsam umspritzt sind.

4. Drehmomentsensor nach mindestens einem der Ansprüche 1 bis 3, **dadurch gekennzeichnet, dass** das Kollektormodul (1) eine oder mehrere Ausnehmungen (6) aufweist, in welche das eine oder die mehreren Magnetfeldsensorelemente (11) zumindest teilweise eingeführt sind, wodurch das zumindest eine Magnetfeldsensorelement (11) gegenüber dem wenigstens einen Kollektor (2, 3) in definierter Weise ausgerichtet und positioniert ist.

5. Drehmomentsensor nach mindestens einem der Ansprüche 1 bis 4, **dadurch gekennzeichnet, dass** das Sensormodul (8) zumindest eine Signalverarbeitungsschaltung umfasst, welche durch den Leadframe (12) elektrisch kontaktiert ist, wobei die wenigstens eine Signalverarbeitungsschaltung separat ausgebildet ist oder in oder mit dem wenigstens einen Magnetfeldsensorelement (11) integriert ist und dass der Leadframe (12) Kontaktpins eines Steckers (18) umfasst oder dass der Leadframe (12) mit einem Kabel elektrisch kontaktiert verbunden ist, wobei dieser Stecker (18) oder Kabelabgang insbesondere durch die gemeinsame Umspritzung des Kollektormoduls (1) und Sensormoduls (8) ausgebildet und/oder abgedichtet ist.

6. Drehmomentsensor nach mindestens einem der Ansprüche 1 bis 5, **dadurch gekennzeichnet, dass** dieser einen Kragen (22), insbesondere mit einer Dichtung, aufweist, welcher so ausgebildet ist, dass der Drehmomentsensor abgedichtet und/oder formschlüssig in ein externes Gehäuse (20) eingefügt werden kann.

7. Drehmomentsensor nach mindestens einem der Ansprüche 1 bis 6, **dadurch gekennzeichnet, dass** das Kollektormodul (1) oder die gemeinsame Umspritzung des Kollektormoduls (1) und des Sensormoduls (8) ein Klammerelement (7) umfasst, welches so ausgebildet ist, dass es zur formschlüssigen Positionierung und/oder Fixierung am Außenumfang einer Welle oder eines zylinderförmigen Körpers (21) ausgebildet ist und dafür mindestens zwei abragende Arme umfasst.

8. Drehmomentsensor nach mindestens einem der Ansprüche 1 bis 7, **dadurch gekennzeichnet, dass** das Sensormodul (8) zumindest zwei Teilmodule (9, 10) umfasst, welche jeweils wenigstens ein Magnetfeldsensorelement (11) und mindestens einen Leadframe (12) umfassen, wobei diese Teilmodule (9, 10) so ausgebildet sind, dass sie formschlüssig miteinander verbunden sind.

9. Drehmomentsensor nach mindestens einem der Ansprüche 1 bis 8, **dadurch gekennzeichnet, dass** das Kollektormodul (1) zwei Kollektoren (2, 3) umfasst, welche jeweils ein Kreissegment (23) und ein gebogenes Konzentratorelement (24) umfassen, wobei die beiden Konzentratorelemente (24) so ausgebildet und angeordnet sind, dass sie zumindest einen gemeinsamen Luftspalt zwischen einander ausbilden, in welchem wenigstens eine Ausnehmung (6) angeordnet ist, zur Aufnahme wenigstens eines Magnetfeldsensorelements (11).

10. Drehmomentsensor nach Anspruch 9, **dadurch gekennzeichnet, dass** die beiden Konzentratorelemente (24) des Kollektormoduls zumindest teilweise, gemeinsam umspritzt sind, wobei in dem Kunststoffgehäuse (4) dieser gemeinsamen Umspritzung die wenigstens eine Ausnehmung (6) im Luftspalt zwischen den beiden Konzentratorelementen (24) der Kollektoren (2, 3) ausgebildet ist.

11. Drehmomentsensor nach mindestens einem der Ansprüche 1 bis 10, **dadurch gekennzeichnet, dass** dieser eine Welle (19) mit zwei Wellenabschnitten, einen magnetischen Encoder und ein Statormodul (21) umfasst, wobei der erste und der zweite Wellenabschnitt durch einen Torsionsstab miteinander verbunden sind und das Drehmoment erfasst werden soll, welches an zumindest einen dieser Wellenabschnitte angreift, wobei auf dem ersten Wellenabschnitt der magnetische Encoder angeordnet ist und auf dem zweiten Wellenabschnitt das Statormodul (21), das dem Encoder zugeordnet ist und diesen zumindest teilweise, berührungslos umschließt und das vom magnetischen Encoder erzeugte Magnetfeld moduliert, wobei das vom Statormodul (21) modulierte Magnetfeld vom Kollektormodul (1) erfasst und zu dem wenigstens einen Magnetfeldsensorelement (11) geleitet wird.

12. Verfahren zur Herstellung eines Drehmomentsensors, insbesondere eines Drehmomentsensors nach mindestens einem der Ansprüche 1 bis 11, **dadurch gekennzeichnet, dass** im Zuge der Herstellung eines Kollektormoduls (1) wenigstens zwei Kollektoren (2, 3) aus magnetisch leitfähigem Material durch Spritzgießen zumindest teilweise in ein Kunststoffgehäuse (4) eingebettet werden,
und dass
im Zuge der Herstellung eines Sensormoduls (8) wenigstens ein Magnetfeldsensorelement (11) und ein damit elektrisch verbundener Leadframe (12) durch Spritzgießen ebenfalls zumindest teilweise in ein Kunststoffgehäuse (9, 10) eingebettet werden und wobei das Kollektormodul (1) und das Sensormodul (8) zumindest eine Positionierausnehmung (5) und wenigstens einen Positionierstift (14) umfassen, als Mittel zur formschlüssigen Verbindung zwischen Kollektormodul (1) und Sensormodul (8).

13. Verfahren nach Anspruch 12, **dadurch gekennzeichnet, dass** im Zuge der Herstellung des Kollektormoduls (1) mindestens ein mechanisches Verbindungselement (5) aus Spritzguss ausgebildet wird,
und dass
im Zuge der Herstellung des Sensormoduls (8) ebenfalls wenigstens ein mechanisches Verbindungselement (14) aus Spritzguss ausgebildet wird,
wonach das Kollektormodul (1) und das Sensormodul (8) mittels des jeweils zumindest einen mechanischen Verbindungselements (14, 5) formschlüssig miteinander verbunden werden.

14. Verfahren nach Anspruch 12 oder 13, **dadurch gekennzeichnet, dass** das Kollektormodul (1) und das Sensormodul (8) zusätzlich zumindest teilweise, gemeinsam umspritzt werden.

## Claims

1. Torque sensor comprising a collector module (1) and a sensor module (8), wherein the collector module (1) has at least one collector (2, 3) made of magnetically conductive material and wherein the sensor module (8) has at least one magnetic field sensor element (11),
wherein
the sensor module (8) comprises a lead frame (12), which electrically contacts the at least one magnetic field sensor element (11), and the lead frame (12) and the at least one magnetic field sensor element (11) are jointly at least partially encapsulated, **characterized in that**
the collector module (1) and the sensor module (8) comprise at least one positioning recess (5) and at least one positioning pin (14), as means for interlocking connection between the collector module (1) and the sensor module (8).

2. Torque sensor according to Claim 1, **characterized in that** the collector module (1) and the sensor module (8) respectively comprise a plastic housing (4, 9, 10), wherein the plastic housing (9, 10) of the sensor module is formed as the joint, at least partial encapsulation of the at least one magnetic field sensor element (11) and the lead frame (12), wherein the plastic housings (4, 9, 10) of the collector module (1) and of the sensor module (8) respectively have at least one means (5, 14) for a joint interlocking connection between the collector module (1) and the sensor module (8).

3. Torque sensor according to Claim 1 or 2, **characterized in that** the collector module (1) and the sensor module (8) are additionally at least partially jointly encapsulated.

4. Torque sensor according to at least one of Claims 1 to 3, **characterized in that** the collector module (1) has one or more recesses (6), in which the one or more magnetic field sensor elements (11) are at least partially inserted, whereby the at least one magnetic field sensor element (11) is aligned and positioned in a defined way with respect to the at least one collector (2, 3).

5. Torque sensor according to at least one of Claims 1 to 4, **characterized in that** the sensor module (8) comprises at least one signal processing circuit, which is electrically contacted by the lead frame (12), wherein the at least one signal processing circuit is separately formed or is integrated in or with the at least one magnetic field sensor element (11) and **in that** the lead frame (12) comprises contact pins of a connector (18) or **in that** the lead frame (12) is connected in an electrically contacted manner to a cable, wherein this connector (18) or cable outlet is formed and/or sealed off in particular by the joint encapsulation of the collector module (1) and the sensor module (8).

6. Torque sensor according to at least one of Claims 1 to 5, **characterized in that** it has a collar (22), in particular with a seal, which is formed such that the torque sensor can be inserted into an external housing (20) in a sealed-off and/or interlocking manner.

7. Torque sensor according to at least one of Claims 1 to 6, **characterized in that** the collector module (1) or the joint encapsulation of the collector module (1) and the sensor module (8) comprises a clip element (7), which is formed such that it is designed for interlocking positioning and/or fixing on the outer circumference of a shaft or of a cylindrical body (21) and for this comprises at least two protruding arms.

8. Torque sensor according to at least one of Claims 1 to 7, **characterized in that** the sensor module (8) comprises at least two submodules (9, 10), which respectively comprise at least one magnetic field sensor element (11) and at least one lead frame (12), wherein these submodules (9, 10) are formed such that they are connected to one another in an interlocking manner.

9. Torque sensor according to at least one of Claims 1 to 8, **characterized in that** the collector module (1) comprises two collectors (2, 3), which respectively comprise a circle segment (23) and an arcuate concentrator element (24), wherein the two concentrator elements (24) are formed and arranged such that they form between one another at least one common air gap, in which there is arranged at least one recess (6), for receiving at least one magnetic field sensor element (11).

10. Torque sensor according to Claim 9, **characterized in that** the two concentrator elements (24) of the collector module are at least partially jointly encapsulated, wherein, in the plastic housing (4) of this common encapsulation, the at least one recess (6) is formed in the air gap between the two concentrator elements (24) of the collectors (2, 3).

11. Torque sensor according to at least one of Claims 1 to 10, **characterized in that** it comprises a shaft (19) with two shaft portions, a magnetic encoder and a stator module (21), wherein the first shaft portion and the second shaft portion are connected to one another by a torsion bar and it is intended that the torque that acts on at least one of these shaft portions is recorded, wherein the magnetic encoder is arranged on the first shaft portion and the stator module (21), which is assigned to the encoder and at least partially contactlessly encloses it and modulates the magnetic field generated by the magnetic encoder, is arranged on the second shaft portion, wherein the magnetic field modulated by the stator module (21) is recorded by the collector module (1) and passed to the at least one magnetic field sensor element (11).

12. Method for producing a torque sensor, in particular a torque sensor according to at least one of Claims 1 to 11, **characterized in that**, in the course of the production of a collector module (1), at least two collectors (2, 3) of magnetically conductive material are at least partially embedded by injection moulding in a plastic housing (4),
and **in that**
in the course of the production of a sensor module (8), at least one magnetic field sensor element (11) and a lead frame (12) electrically connected to it are likewise at least partially embedded by injection moulding in a plastic housing (9, 10) and the collector module (1) and the sensor module (8) comprise at least one positioning recess (5) and at least one positioning pin (14), as means for interlocking connection between the collector module (1) and the sensor module (8).

13. Method according to Claim 12, **characterized in that**, in the course of the production of the collector module (1), at least one mechanical connecting element (5) is formed from injection-moulding material,
and **in that**
in the course of the production of the sensor module (8), likewise at least one mechanical connecting element (14) is formed from injection-moulding material,
after which the collector module (1) and the sensor module (8) are connected to one another in an interlocking manner by means of the in each case at least one mechanical connecting element (14, 5).

14. Method according to Claim 12 or 13, **characterized in that** the collector module (1) and the sensor module (8) are additionally at least partially jointly encapsulated.

## Revendications

1. Capteur de couple de rotation comprenant un module collecteur (1) et un module capteur (8), dans lequel le module collecteur (1) comporte au moins un collecteur (2, 3) constitué d'un matériau magnétiquement conducteur et dans lequel le module capteur (8) comporte au moins un élément capteur de champ magnétique (11), dans lequel
le module capteur (8) comprend une grille de connexion (12) qui est en contact électrique avec l'au moins un élément capteur de champ magnétique (11), et dans lequel la grille de connexion (12) et l'au moins un élément capteur de champ magnétique (11) sont au moins partiellement enrobés en commun, **caractérisé en ce que** le module collecteur (1) et le module capteur (8) comprennent au moins un évidement de positionnement (5) et au moins une tige de positionnement (14) en tant que moyens de liaison par complémentarité de forme entre le module collecteur (1) et le module capteur (8).

2. Capteur de couple de rotation selon la revendication 1, **caractérisé en ce que** le module collecteur (1) et le module capteur (8) comprennent respectivement un boîtier en matière plastique (4, 9, 10), dans lequel le boîtier en matière plastique (9, 10) du module capteur est réalisé sous la forme de l'enrobage commun au moins partiel de l'au moins un élément capteur de champ magnétique (11) et de la grille de connexion (12), dans lequel le boîtier en matière plastique (4, 9, 10) du module collecteur (1) et du module capteur (8) comportent respectivement au moins un moyen (5, 14) destiné à une liaison commune par complémentarité de forme entre le module collecteur (1) et le module capteur (8).

3. Capteur de couple de rotation selon la revendication 1 ou 2, **caractérisé en ce que** le module collecteur (1) et le module capteur (8) sont en outre au moins partiellement enrobés en commun.

4. Capteur de couple de rotation selon au moins l'une des revendications 1 à 3, **caractérisé en ce que** le module collecteur (1) comporte un ou plusieurs évidements (6) dans lesquels lesdits un ou plusieurs éléments capteurs de champ magnétique (11) sont au moins partiellement introduits, d'où il résulte qu'au moins un élément capteur de champ magnétique (11) est orienté et positionné de manière définie en face de l'au moins un collecteur (2, 3).

5. Capteur de couple de rotation selon au moins l'une des revendications 1 à 4, **caractérisé en ce que** le module capteur (8) comprend au moins un circuit de traitement de signal avec lequel un contact électrique est établi par l'intermédiaire de la grille de connexion (12), dans lequel l'au moins un circuit de traitement de signal est réalisé de manière séparée ou est intégré dans ou avec l'au moins un élément capteur de champ magnétique (11) et **en ce que** la grille de connexion (12) comprend des broches de contact d'un connecteur (18) ou **en ce que** la grille de connexion (12) est connectée par mise en contact électrique avec un câble, dans lequel ledit connecteur (18) ou une sortie de câble est notamment réalisé et/ou est rendu étanche au moyen de l'enrobage commun du module collecteur (1) et du module capteur (8).

6. Capteur de couple de rotation selon au moins l'une des revendications 1 à 5, **caractérisé en ce que** celui-ci comporte un collier (22) notamment doté d'une étanchéité, lequel collier est réalisé de manière à ce que le capteur de couple de rotation puisse être rendu étanche et/ou puisse être introduit par complémentarité de forme dans un boîtier externe (20).

7. Capteur de couple de rotation selon au moins l'une des revendications 1 à 6, **caractérisé en ce que** le module collecteur (1) ou l'enrobage commun du module collecteur (1) et du module capteur (8) comprend un élément formant pince (7) qui est réalisé de manière à pouvoir être positionné et/ou fixé par complémentarité de forme sur la périphérie extérieure d'un arbre ou d'un corps de forme cylindrique (21) et **en ce qu'**il comprend à cet effet deux bras faisant saillie.

8. Capteur de couple de rotation selon au moins l'une des revendications 1 à 7, **caractérisé en ce que** le module capteur (8) comprend au moins deux sous-modules (9, 10) qui comprennent respectivement au moins un élément capteur de champ magnétique (11) et au moins une grille de connexion (12), dans lequel lesdits sous-modules (9, 10) sont réalisés de manière à ce qu'ils soient reliés l'un à l'autre par complémentarité de forme.

9. Capteur de couple de rotation selon au moins l'une des revendications 1 à 8, **caractérisé en ce que** le module collecteur (1) comprend deux collecteurs (2, 3) qui comprennent respectivement un segment de cercle (23) et un élément concentrateur incurvé (24), dans lequel les deux éléments concentrateurs (24) sont conçus et disposés de manière à ce qu'ils forment entre eux au moins un interstice d'air commun dans lequel est disposé au moins un évidement (6) destiné à recevoir au moins un élément capteur de champ magnétique (11).

10. Capteur de couple de rotation selon la revendication 9, **caractérisé en ce que** les deux éléments concentrateurs (24) du module collecteur sont au moins partiellement enrobés, dans lequel l'au moins un évidement (6) est réalisé dans le boîtier en matière plastique (4) constitué dudit enrobage commun, dans l'interstice d'air entre les deux éléments concentrateurs (24) des collecteurs (2, 3).

11. Capteur de couple de rotation selon au moins l'une des revendications 1 à 10, **caractérisé en ce qu'**il comprend un arbre (19) comportant deux parties d'arbre, un codeur magnétique et un module de stator (21), dans lequel les première et seconde parties d'arbre sont reliées l'une à l'autre par l'intermédiaire d'une barre de torsion et le couple de rotation qui agit sur au moins une desdites parties d'arbre doit être détecté, dans lequel le codeur magnétique est disposé sur la première partie d'arbre et le module de stator (21), qui est associé au codeur et entoure ce dernier au moins partiellement sans contact et module le champ magnétique généré par le codeur magnétique, est disposé sur la seconde partie d'arbre, dans lequel le champ magnétique modulé par le module de stator (21) est détecté par le module collecteur (1) et est acheminé vers l'au moins un élément capteur de champ magnétique (11).

12. Procédé de fabrication d'un capteur de couple de rotation, notamment d'un capteur de couple de rotation selon au moins l'une des revendications 1 à 11, **caractérisé en ce que**, au cours de la fabrication d'un module collecteur (1), au moins deux collecteurs (2, 3) constitués d'un matériau magnétiquement conducteur sont au moins partiellement noyés dans un boîtier en matière plastique (4) par moulage par injection et **en ce que**,
au cours de la fabrication d'un module collecteur (8), au moins un élément capteur de champ magnétique (11) et une grille de connexion (12) électriquement connectée à celui-ci sont au moins partiellement noyés dans un boîtier en matière plastique (9, 10) par moulage par injection, et dans lequel le module collecteur (1) et le module capteur (8) comprennent au moins un évidement de positionnement (5) et au moins une tige de positionnement (14), en tant que moyens destinés à une liaison par complémentarité de forme entre le module collecteur (1) et le module capteur (8).

13. Procédé selon la revendication 12, **caractérisé en ce que**, au cours de la fabrication du module capteur (1), au moins un élément de liaison métallique (5) est réalisé par moulage par injection, et **en ce que**,
au cours de la fabrication du module capteur (8), au moins un élément de liaison métallique (14) est également réalisé par moulage par injection,
et le module collecteur (1) et le module capteur (8) sont ensuite reliés l'un à l'autre par complémentarité de forme au moyen dudit au moins un élément de liaison mécanique respectif (14, 15).

14. Procédé selon la revendication 12 ou 13, **caractérisé en ce que** le module collecteur (1) et le module capteur (8) sont en outre au moins partiellement enrobés en commun.
